# EUROPEAN PATENT APPLICATION

(11) **EP 2 736 258 A2**
(43) Date of publication of application: **28.05.2014**
(21) Application number: 13194139.5
(22) Date of filing: 22.11.2013
(51) Int. Cl.: H04N 13/04

(54) **Apparatus and method for performing multi-view display**

(30) Priority: 27.11.2012 KR 20120135407
(71) Applicant: Samsung Electronics Co., Ltd, Gyeonggi-do 443-742 (KR)
(72) Inventor: Seo, Je-hwan, Daegu (KR); Yang, Geun-sam, Gyeonggi-do (KR); Lee, Seung-bok, Gyeonggi-do (KR); Ha, Tae-hyeun, Gyeonggi-do (KR)
(74) Representative: Walaski, Jan Filip

(57) **Abstract**

A display apparatus is provided, including a video processor configured to process video data of contents, a display configured to display content views using the video data processed by the video processor, a communication unit configured to communicate with an external device which is paired with the display apparatus, and a control unit configured to assign a remote control right to a content view corresponding to the remote control right switching command from among the content views based on whether the remote control right switching command is received from the external device. If a remote control signal is received, the control unit performs an operation corresponding to the remote control signal with respect to the content view having the remote control right.

## Description

The present invention relates to a display apparatus and a multi-view display method using the same, and more particularly, to a display apparatus capable of selectively switching a remote control right when providing a multi-view display, and a multi-view display method using the same. The remote control right refers to a permission/entitlement to control a content view, as will be described in more detail below.

Due to the development of electronic technology, diverse types of electronic products have been developing and are now being distributed. In particular, diverse display apparatuses such as televisions (TVs), mobile phones, personal computers (PCs), notebook computers, personal digital assistants (PDAs), etc., are generally used in many households.

As the use of display apparatuses increases, users' needs for more diverse functions increase. Accordingly, due to the manufacturers' efforts to meet the users' needs, products having new functions are being introduced.

One such product is a three-dimensional (3D) display apparatus. A 3D display apparatus may be implemented without glasses, but most 3D display apparatuses function with glasses in consideration of a cubic effect. In order to implement a 3D function, the display apparatus or glasses need more diverse hardware than related-art display apparatuses.

As display apparatuses are being implemented with glasses, there is a need for technologies providing various services using such a structure.

According to an aspect of the exemplary embodiments, a display apparatus includes a video processor configured to process video data of contents, a display configured to display content views using the video data processed by the video processor, a communication unit configured to communicate with an external device which is paired with the display apparatus, and a control unit configured to assign a remote control right to a content view corresponding to a remote control right switching command from among the plurality of content views in response to receiving the remote control right switching command from the external device.

The display apparatus may further include a synchronization signal generator configured to generate synchronization signals corresponding to the content views, wherein the communication unit comprises a first communication unit configured to receive the remote control right switching command from the external device, and a second communication unit configured to transmit the synchronization signals to the external device, and wherein the external device is a shutter glass type glasses apparatus which comprises a left eye shutter glass and a right eye shutter glass which are driven individually.

The external device may be a polarization type glasses apparatus which includes polarizing glasses.

The display apparatus may further include an OSD processor which, when the content view assigned the remote control right is switched in accordance with the remote control right switching command, is configured to display a notification message indicating a content view to which the remote control right is newly assigned.

In a state that a preset number of glasses apparatuses are paired with the display apparatus, when a connection request is received from a new glasses apparatus not included in the preset number of glasses apparatuses, the control unit is configured to transmit a connection rejection signal to the new glasses apparatus.

The control unit is configured to display a connection rejection message through the display.

The display apparatus may further include an on-screen display (OSD) processor which, when a menu display command is input, is configured to generate a plurality of OSD menus.

The display unit is configured to display the OSD menus on at least one of the content views.

The control unit is configured to control the OSD processor to selectively dim at least one of the OSD menus according to a pairing state with the external device or a source type of the content views.

The display apparatus may further include an audio processor which is configured to individually process audio data included in the contents, and a packetizer which is configured to packetize the audio data processed by the audio processor, to thereby generate audio data packets, wherein the first communication unit is configured to transmit the audio data packets generated by the packetizer to the glasses apparatus.

According to another aspect of the exemplary embodiments, a multi-view display method to be performed by a display apparatus includes processing video data of contents, displaying content views using the processed video data, and assigning a remote control right to a content view corresponding to a remote control right switching command from among the content views in response to receiving the remote control right switching command from an external device which is paired with the display apparatus.

The method may further include generating synchronization signals corresponding to the content views, and transmitting the synchronization signals to the external device, wherein the external device is a shutter glass type glasses apparatus which comprises a left eye shutter glass and a right eye shutter glass which are driven individually.

The external device may be a polarization type glasses apparatus which comprises polarizing glasses.

The method may further include, when the content view assigned the remote control right is switched in accordance with the remote control right switching command, displaying a notification message on a content view to which the remote control right is newly assigned.

The method may further include, in a state that a preset number of glasses apparatuses are paired with the display apparatus, when a connection request is received from a new glasses apparatus not included in the preset number of glasses apparatuses, transmitting a connection rejection signal to the new glasses apparatus.

The method may further include displaying the connection rejection message.

The method may further include, when a menu display command is input, generating OSD menus, and displaying the OSD menus on at least one of the content views, wherein at least one of the OSD menus is selectively dimmed according to a pairing state with the external device or a source type of the content views.

The method may further include individually processing audio data included in the contents, packetizing the processed audio data, to thereby generate audio data packets, and transmitting the audio data packets to the glasses apparatus.

According to yet another aspect of the exemplary embodiments, a glasses apparatus which is configured to interwork with a display apparatus which is configured to display content views includes a communication unit which is configured to communicate with the display apparatus, a key which is configured to match with a remote control right switching command, and a control unit which is configured to control the communication unit to transmit to the display apparatus the remote control right switching command to switch a remote control right to a content view which is synchronized with the glasses apparatus from among the content views in response to the key being selected.

The glasses apparatus may further include a first shutter glass and a second shutter glass, a shutter glass driving unit which is configured to drive the first shutter glass and the second shutter glass, an audio processor which is configured to process an audio signal, and an audio output unit which is configured to output the audio signal processed by the audio processor.

The communication unit may include a first communication unit which is configured to receive a synchronization signal for the content views from the display apparatus and transmit the synchronization signal to the shutter glass driving unit, and a second communication unit which is configured to receive the audio signal from the display apparatus and transmit the audio signal to the audio processor.

According to the various exemplary embodiments, the display apparatus provides a plurality of content views and enables the user to conveniently switch an object controlled by a remote controller. In addition, various types of information may be provided according to a connection state of the glasses apparatus and the display apparatus. Accordingly, a multi-view display function which is conveniently used by the user may be provided.

Additional and/or other aspects and advantages of the exemplary embodiments will be set forth in part in the description which follows and, in part, will be obvious from the description, or may be learned by practice of the exemplary embodiments.

The above and/or other aspects of the present invention will be more apparent by describing certain exemplary embodiments with reference to the accompanying drawings, in which:
FIG. 1 is a block diagram illustrating a configuration of a display apparatus according to an exemplary embodiment;
FIG. 2 illustrates a case of performing a multi-view display using a plurality of 2D contents in an active type display apparatus according to an exemplary embodiment;
FIG. 3 illustrates a case of performing a multi-view display using a plurality of 3D contents in an active type display apparatus according to an exemplary embodiment;
FIG. 4 illustrates a case of performing a multi-view display in a passive type display apparatus according to an exemplary embodiment;
FIGs. 5 and 6 illustrate a method for switching a remote control right according to a remote control right switching command transmitted from a glasses apparatus according to an exemplary embodiment;
FIG. 7 is a block diagram illustrating a detailed configuration of an active type display apparatus according to an exemplary embodiment;
FIG. 8 is a block diagram illustrating a configuration of an active type glasses apparatus according to an exemplary embodiment;
FIGs. 9 and 10 illustrate structures of an audio data packet according to exemplary embodiments;
FIG. 11 illustrates a method for receiving an audio data packet corresponding to a synchronized content view by the glasses apparatus shown in FIG. 8 according to an exemplary embodiment;
FIG. 12 is a timing chart illustrating an operation between the display apparatus and the glasses apparatus to switch a remote control right according to an exemplary embodiment;
FIG. 13 is a timing chart illustrating a pairing operation between the display apparatus and the glasses apparatus according to an exemplary embodiment;
FIGs. 14 and 15 illustrate an operation of the display apparatus showing connection states of glasses apparatuses according to an exemplary embodiment;
FIG. 16 illustrates an operation of the display apparatus which displays a menu deactivated selectively according to a connection state of the glasses apparatus according to an exemplary embodiment;
FIG. 17 is a flow chart illustrating a multi-view display method of a display apparatus according to an exemplary embodiment;
FIG. 18 is a flow chart illustrating a remote control right switching method of a glasses apparatus according to an exemplary embodiment; and
FIG. 19 illustrates an example of an exterior structure of a glasses apparatus including a key for inputting a remote control right switching command.

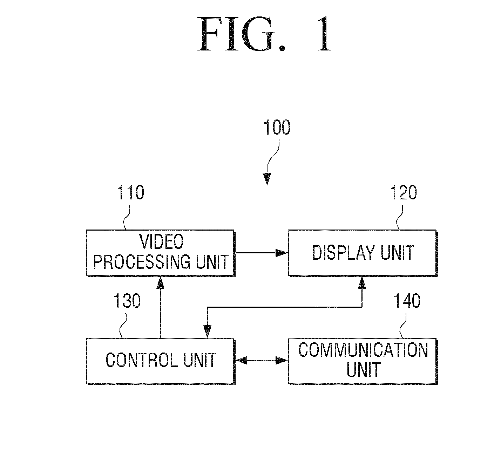

As shown in FIG. 1, the display apparatus 100 includes a video processing unit 100 (e.g., video processor), a display unit 120 (e.g., display), a control unit 130, and a communication unit 140. The display apparatus 100 may be implemented as various types of devices having a display unit, such as a television (TV), mobile phone, personal digital assistant (PDA), notebook computer, monitor, tablet PC, electronic book, electronic photo frame, kiosk, and the like.

The display apparatus 100 provides a multi-view mode. The multi-view mode is a mode to display a plurality of different contents using the single display apparatus 100. According to an exemplary embodiment, when two contents are displayed, the display mode is called a dual view mode, when three contents are displayed, the display mode is called a triple view mode, and when four contents are displayed, the display mode is called a quadruple view mode, and throughout this document, these modes may commonly be called a multi-view mode or function. The display apparatus 100 may operate selectively in a general mode to display one content or in the multi-view mode to display multiple contents. Alternatively, according to an exemplary embodiment, the display apparatus 100 may change to a three-dimensional (3D) mode to perform a 3D display or an Internet mode to be connected to the Internet. Since certain of the exemplary embodiments are related to the multi-view mode, a case in which the display apparatus 100 operates in the multi-view mode is explained.

In the multi-view mode, the video processing unit 110 of the display apparatus 100 processes video data of a plurality of content individually. The content may be broadcast program data received through a broadcasting channel, a data file stored in a storage element (not shown) which is built in or outside the display apparatus 100, media content reproduced by a recording medium reproducing apparatus which is connected to the display apparatus 100, a webpage screen generated by executing a web browser, or an application executing screen generated by executing diverse application programs.

The display unit 120 displays a plurality of content views using video data processed by the video processing unit 110. The display unit 120 may be implemented in a liquid crystal display (LCD) including a display panel (not shown) and a backlight unit (not shown). In addition, the display unit 120 may be implemented as an organic light emitting diode (OLED) type, a plasma display panel (PDP) type, or other types of displays. A method for constituting and displaying a content view may vary according to a type of the display apparatus 100. A detailed description of a method for constituting and displaying a content view according to an exemplary embodiment will be provided below.

The communication unit 140 communicates with external devices to transmit or receive other types of commands or data. The external devices may include, for example, a remote controller, glasses apparatuses, and other types of user terminal devices.

More specifically, the communication unit 140 may receive a remote control right switching command from an external device which is paired with the display apparatus 100, transmit a synchronization signal to a glasses apparatus, or transmit or receive an audio signal or other commands. The communication unit 140 may communicate with external devices using many different types of communication methods such as Bluetooth, wireless fidelity (WiFi), Zigbee, Institute of Electrical and Electronics Engineers (IEEE), radio frequency (RF) wireless communications, and the like. In addition, the communication unit 140 may not be limited to one unit, but may be implemented in a plurality of units. For example, the communication unit 140 may include a first communication unit to receive a remote control right switching command from an external device, and a second communication unit to transmit a synchronization signal to an external device. In this case, communication methods of the first and second communication units may be different or the same. Such an exemplary embodiment will be described below in greater detail. In this exemplary embodiment, a case in which a remote control right switching command is input from the glasses apparatus 200 through the communication unit 140 is explained.

When a remote control right switching command is input, the control unit 130 gives (e.g., assigns) a remote control right to a content view corresponding to the remote control right switching command from among a plurality of content views. According to exemplary embodiments, the remote control right is a right to control various types of functions and settings using a remote controller. For example, the remote control right is given to the first content view, but if a remote control right switching command is input to the second content view from the glass apparatus 200, the control unit 130 gives (e.g., assigns) the remote control right to the second content view.

When a remote control signal is received from the remote controller, the control unit 130 performs an operation corresponding to the remote control signal for the content view having the remote control right. For example, when the remote control right is given to a content view displaying a broadcast program signal and a channel-up signal or a channel-down signal is received, the control unit 130 turns up or down a TV channel displayed on the corresponding content view. In addition, when a volume-up signal or a volume-down signal is received, the control unit 130 turns up or down an audio output level of the content view having the remote control right. Also, when a remote control signal to adjust diverse properties such as, for example, color, contrast, chroma, cubic effect and the like is received, the control signal 130 adjusts properties, such as color, contrast, chroma, cubic effect and the like, of a video frame of the corresponding content view according to the remote control signal.

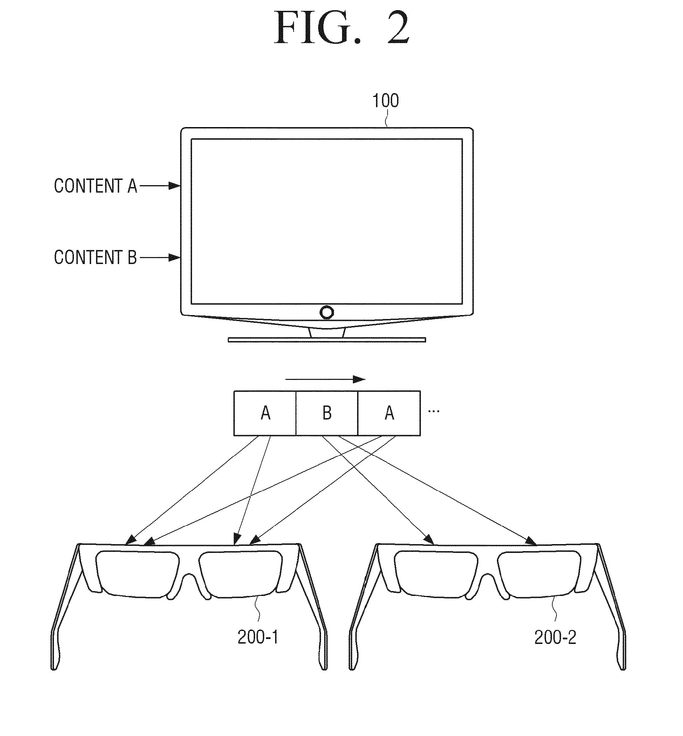

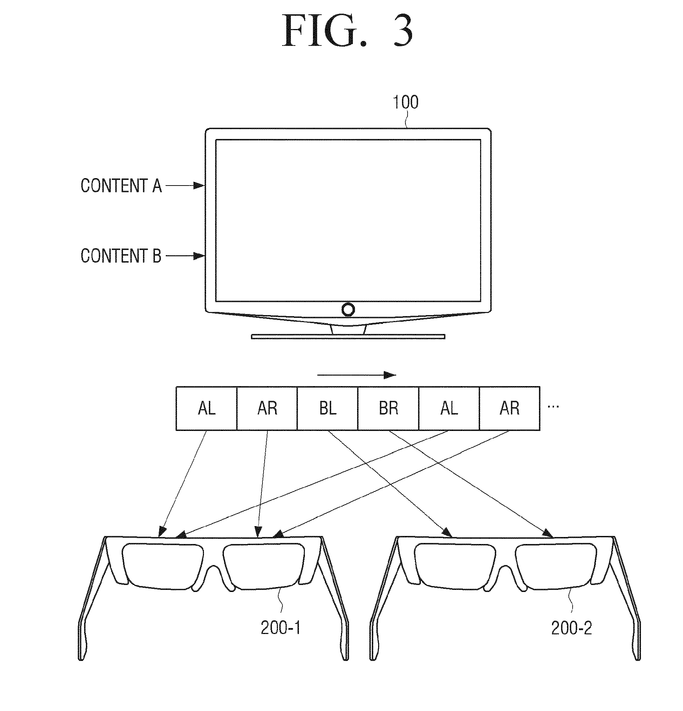

The display apparatus 100 may be implemented as an active type or a passive type. FIGs. 2 and 3 illustrate an operation of an active type display apparatus and a glasses apparatus according to an exemplary embodiment.

Firstly, FIG. 2 illustrates a case of performing a multi-view display using two 2D contents A and B in an active type display apparatus. For convenient description, content views corresponding to contents A and B are illustrated as A and B, respectively. According to exemplary embodiments, contents A and B may be diverse types of contents such as broadcast programs received through broadcasting channels, multimedia contents provided from a network source, multimedia contents stored in a storage element which is built in or outside the display apparatus 100, and the like. In addition, contents A and B may be moving images or audio-eliminated contents, such as still images and text.

The video processing unit 110 detects video data by demultiplexing contents A and B individually and generates video frames by decoding and scaling the video data. The display unit 120 displays the generated video frames alternately at least one by one. The display apparatus 100 generates synchronization signals and transmits the synchronization signals to glasses apparatuses 200-1 and 200-2 so that the glasses apparatuses 200-1 and 200-2 can be synchronized with a display timing of each video frame. Although two glasses apparatuses 200-1 and 200-2 are shown in FIG. 2, it is understood that more than two glasses apparatuses may be used according to exemplary embodiments.

The glasses apparatuses 200-1 and 200-2 are glasses apparatuses of a shutter glass type. The shutter glass type is a method of individually adjusting a polarization direction by individually turning on or off a liquid crystal shutter of the left eye's glass and a liquid crystal shutter of the right eye's glass. In other words, the first glasses apparatus 200-1 which is matched with content A turns on both the left eye's glass and the right eye's glass in synchronization with an output timing of content view A, and turns off both the left eye's glass and the right eye's glass in synchronization with an output timing of content view B. Accordingly, the user wearing the first glasses apparatus 200-1 can perceive only content view A.

On the other hand, the second glasses apparatus 200-2 which is matched with content B turns on both the left eye's glass and the right eye's glass in synchronization with an output timing of content view B. Accordingly, the user wearing the second glasses apparatus 200-2 can perceive only content view B.

In order to drive each glasses apparatus 200-1 and 200-2 in synchronization with an output timing of each content view, the display apparatus 100 transmits a synchronization signal to each glasses apparatus 200-1 and 200-2. The synchronization signal may be transmitted using diverse methods. For example, the synchronization signal may be transmitted by broadcasting an infrared (IR) signal or an RF signal, or may be transmitted according to diverse wireless communication protocols such as Bluetooth, WiFi, Zigbee, IEEE, and the like. A communication unit to transmit the synchronization signal may be provided separately.

FIG. 3 illustrates a case of performing a multi-view display using two 3D contents A and B. 3D content includes a left-eye image and a right-eye image. Accordingly, content A includes a left-eye image content view AL and a right-eye image content view AR, and content B includes a left-eye image content view BL and a right-eye image content view BR. As a result, AL, AR, BL, and BR are displayed sequentially.

The first glasses apparatus 200-1 drives the left eye's glass in synchronization with an output timing of a left-eye image content view AL of content A, and drives the right eye's glass in synchronization with an output timing of a right-eye image content view AR of content A. Accordingly, the user wearing the first glasses apparatus 200-1 can view 3D content A three-dimensionally. On the contrary, the second glasses apparatus 200-2 drives the left eye's glass in synchronization with an output timing of a left-eye image content view BL of content B, and drives the right eye's glass in synchronization with an output timing of a right-eye image content view BR of content B. Accordingly, the user wearing the second glasses apparatus 200-2 can three-dimensionally view 3D content B.

The display system shown in FIGs. 2 and 3 may also reproduce a single 3D content as well as reproducing multiple contents using the multi-view function. When reproducing a single 3D content, each glasses apparatus 200-1 and 200-2 drives the left eye's glass and the right eye's glass alternately in synchronization with a display timing of a left-eye image and a right-eye image. An illustration and description of the operation of a display system reproducing a 3D content is omitted here.

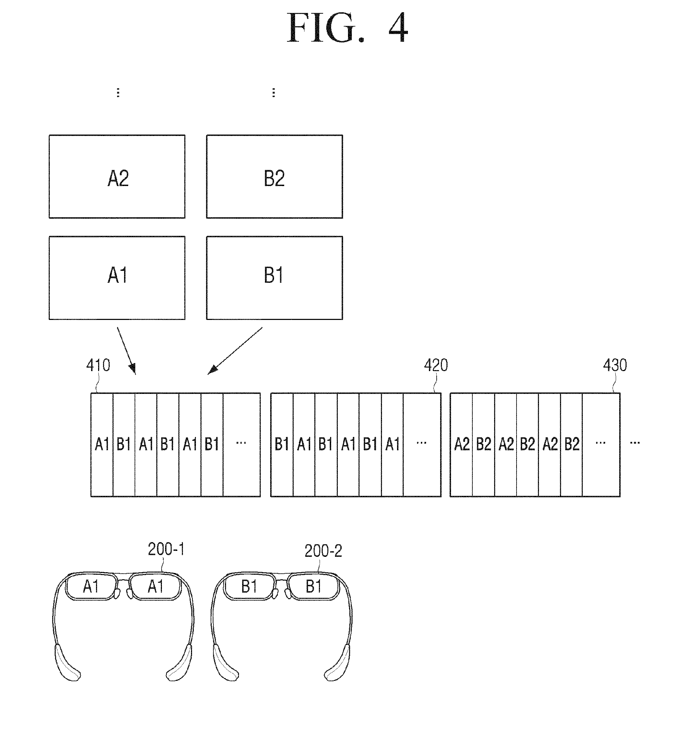

FIG. 4 illustrates an operation of a passive type display apparatus and glasses apparatuses according to an exemplary embodiment. With reference to FIG. 4, the video processing unit 110 divides left-eye image frames A1, A2, ... and right-eye image frames B1, B2, ... into a plurality of lines respectively and combines the divided lines, thereby generating new frames. For example, a first frame 410 is generated by combining odd number lines of the first left-eye image frame A1 and even number lines of the first right-eye image frame B1. In addition, a second frame 420 is generated by combining even number lines of the first left-eye image frame A1 and odd number lines of the first right-eye image frame B1. Subsequently, a third frame 430 and a fourth frame 440 are generated using the second left-eye image frame A2 and the second right-eye image frame B2.

The display unit 120 divides each frame 410,420,430,... according to a line, and displays an image so that polarization directions of each line can be at right angles to each other.

The passive type glasses apparatuses 200-1 and 200-2 are configured such that the left eye's glass and the right eye's glass have the same polarization direction. That is, in the passive type 3D glasses apparatus, polarization directions of the left eye's glass and the right eye's glass are at right angles to each other, whereas in the passive type multi-view glasses apparatus, polarization directions of the left eye's glass and the right eye's glass are the same. If the left eye's glass and the right eye's glass of the first glasses apparatus 200-1 penetrate light of a first polarization direction, the odd number lines of the first frame 410 and the even number lines of the second frame 420 are perceived by the user of the first glasses apparatus 200-1. On the contrary, if the left eye's glass and the right eye's glass of the second glass apparatus 200-2 penetrate light of a second polarization direction, the even number lines of the first frame 410 and the odd number lines of the second frame 420 are perceived by the user of the second glasses apparatus 200-2.

In view of the above, the display apparatus 100 may be implemented in diverse forms such as an active type and a passive type. Hereinbelow, the display apparatus 100 of an active type according to an exemplary embodiment is described for reference.

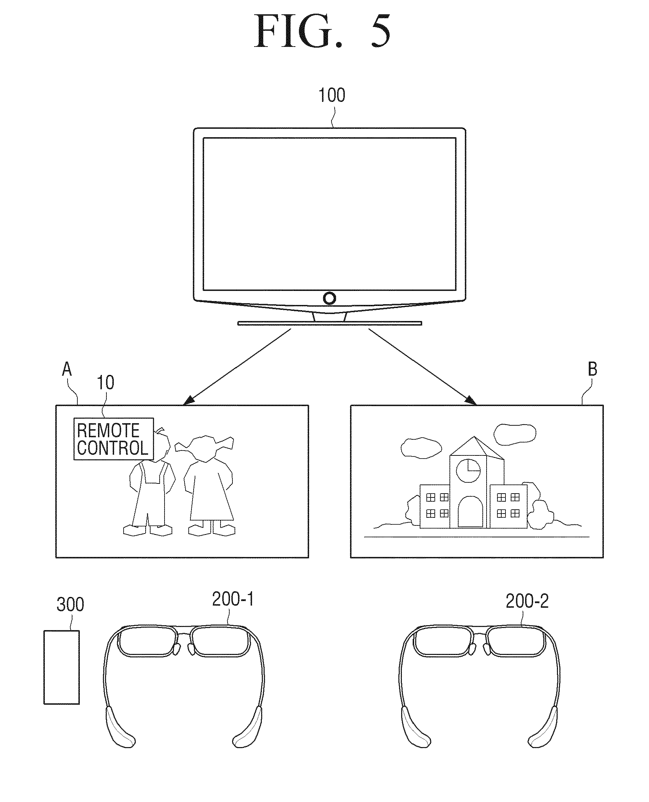

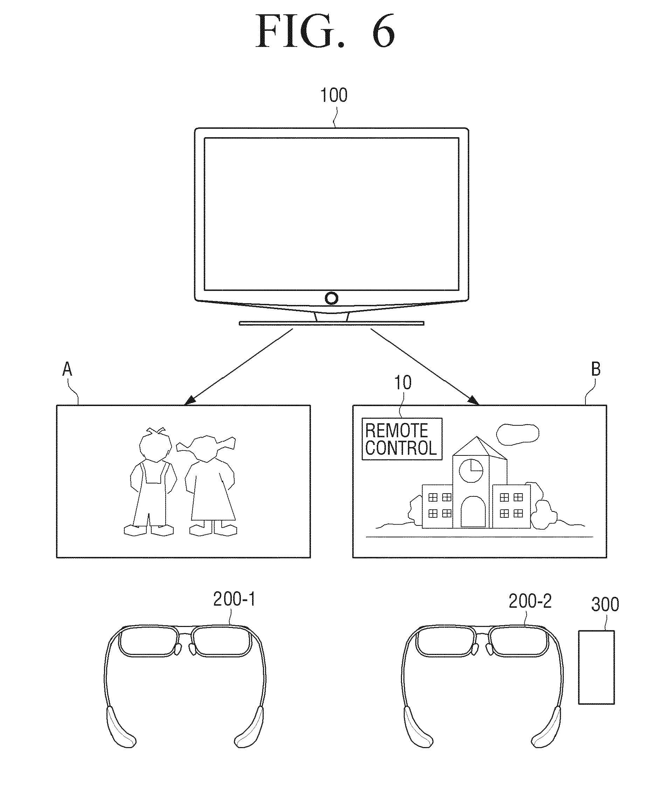

FIGs. 5 and 6 illustrate a method for switching a remote control right according to an exemplary embodiment. As shown in FIG. 5, two content views A and B are displayed, a first glasses apparatus 200-1 is matched with content view A, and a second glasses apparatus 200-2 is matched with content view B. In the multi-view mode, if a multi-view display is executed, the remote control right is given to a main channel, content view A, as the default. Accordingly, an on-screen display (OSD) message 10 indicating the presence of the remote control right is displayed on content view A. The OSD message 10 is a notification message. The user of the first glass apparatus 200-1 may control content view A using a remote controller 300. For example, the user may change at least one characteristic related to content view A, such as, for example, content displayed on content view A, volume, or display properties.

In this state, if the user of the second glasses apparatus 200-2 synchronized with second content view B inputs a remote control right switching command, the remote control right is given to second content view B. Consequently, the OSD message 10 is displayed on second content view B.

The remote control right switching command may be input by pressing a button provided on the glasses apparatus. That is, the first and second glasses apparatuses 200-1 and 200-2 each include a button. When a button on the second glasses apparatus 200-2 is pressed, the second glasses apparatus 200-2 transmits information about a currently synchronized content view to the display apparatus 100 so that the display apparatus 100 can give the remote control right to content B synchronized with the second glasses apparatus 200-2.

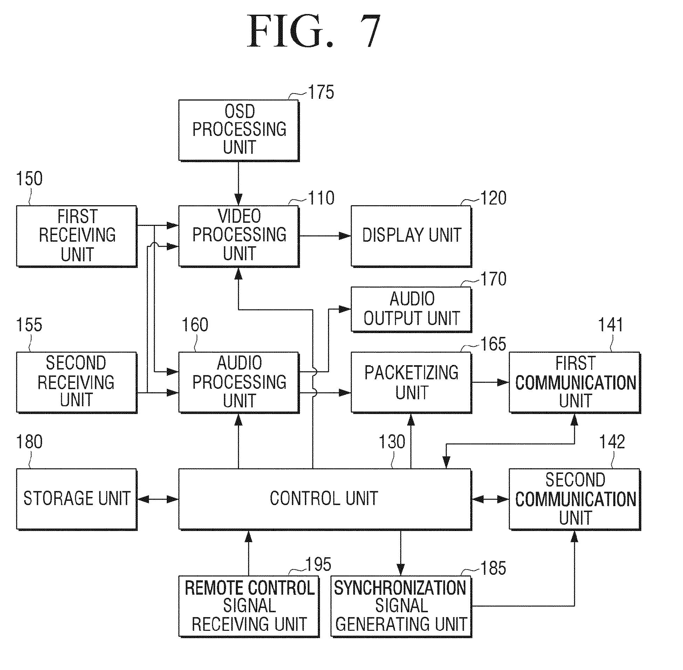

FIG. 7 is a block diagram illustrating a detailed configuration of an active type display apparatus according to an exemplary embodiment. As shown in FIG. 7, the display apparatus 100 may include a video processing unit 110, a display unit 120, a control unit 130, a first communication unit 141, a first receiving unit 150, a second receiving unit 155, an audio processing unit 160 (e.g., audio processor), a packetizing unit 165 (e.g., packetizer), an audio output unit 170, an OSD processing unit 175 (e.g., OSD processor), a storage unit 180, a synchronization signal generating unit 185 (e.g., synchronization signal generator), a second communication unit 142, and a remote control signal receiving unit 195.

The first and second receiving units 150 and 155 may be broadcast signal receiving units to receive a broadcast signal. The structure of the first and second receiving units 150 and 155 may vary according to a broadcasting standard. More specifically, the display apparatus 100 may be implemented in a TV compatible with diverse broadcasting standards, such as, for example, Advanced Television System Committee (ATSC) and phase-alternating line (PAL) standards. In the ATSC standard, the first and second receiving units 150 and 155 each may include a tuner, a demodulator, an equalizer, and so on.

Broadcast content received by the first and second receiving units 150 and 155 is demultiplexed by a demultiplexer (not shown). Consequently, video data, audio data, and supplementary data are detected. The video data are input to the video processing unit 110, and the audio data are input to the audio processing unit 160. The supplementary data are input to a general data decoder (not shown) and are processed. In FIG. 7, the video processing unit 110 and audio processing unit 160 each are illustrated as a single unit, but may be provided in a plurality of units corresponding to the number of the receiving units.

The video processing unit 110 performs diverse video signal processing operations such as decoding, de-interleaving, scaling, frame rate conversion, etc., thereby generating a video frame. Subsequently, the video processing unit 110 combines video frames and transmits the video frames to the display unit 120. In the multi-view mode, the display unit 120 displays a video frame of content 1 and a video frame of content 2 alternately by at least one frame.

The OSD processing unit 175 generates an OSD message which may be added onto each content view and transmits the OSD message to the video processing unit 110. The OSD processing unit 175 may generate various types of OSD messages according to control of the control unit 130. The OSD processing unit 175 may include a calculation unit (not shown), a rendering unit (not shown), and a buffer unit (not shown). The calculation unit calculates property values such as a coordinate value for displaying each object, form, size, and color according to the layout of a corresponding screen based on layout data of the screen stored in the storage unit 180. The rendering unit generates the OSD message 10 as shown in FIGs. 5 and 6 based on the calculated property values. The menu data generated by the rendering unit is stored in the buffer unit (not shown). The stored menu data are added to a video frame generated by the video processing unit 110 and are displayed by the display unit 120. According to exemplary embodiments, the OSD processing unit 175 may generate diverse types of OSD messages indicating various types of information, such as a remote control right, a pairing state, channel number, volume level, broadcasting information, and so on.

The audio processing unit 160 performs various types of audio signal processing operations to process audio data of content, such as audio decoding, noise filtering, amplification, and so on, thereby generating an audio signal. The generated audio signal is transmitted to the audio output unit 170 or the packetizing unit 165.

According to an exemplary embodiment, in the general mode or in the 3D mode, the control unit 130 activates only one of the first and second receiving units 150 and 155 and outputs a single 2D content or 3D content. In addition, the control unit 130 controls the audio processing unit 160 to transmit an audio signal to the audio output unit 170.

On the other hand, in the multi-view mode, the control unit 130 activates both the first and second receiving units 150 and 155 so as to receive a plurality of contents. In addition, the control unit 130 controls the audio processing unit 160 to transmit an audio signal generated by the audio processing unit 160 to the packetizing unit 165.

The packetizing unit 165 generates a communication packet by mixing audio signals of each type of content. The first communication unit 141 transmits the communication packet generated by the packetizing unit 165 in a preset frequency band. The frequency band may be selected as one of a plurality of candidate bands. For example, the first communication unit 141 may arbitrarily select one frequency band such as 2.4 GHz, 5.2 GHz, and 5.5 GHz and transmit a communication packet using the selected frequency band.

In the multi-view mode, the control unit 130 may activate the synchronization signal generating unit 185.

The synchronization signal generating unit 185 generates a synchronization signal to synchronize a display timing of a video frame of content 1 and a display timing of a video frame of content 2 with operations of each glasses apparatus. The synchronization signal may be generated in diverse forms according to a wireless communication method applied between the display apparatus 100 and the glass apparatuses. For example, the synchronization signal may be generated as an RF signal or IR signal, or in a data packet form according to diverse wireless communication standards such as Bluetooth, WiFi, Zigbee, IEEE, and so on. The synchronization signal may be divided into a plurality of synchronization periods. Each synchronization period may be divided by a rising edge or a falling edge of a pulse indicating synchronization information. The synchronization signal generating unit 185 may insert state information indicating whether the multi-view function is currently being executed and whether 3D content is being reproduced, and may further insert timing information for synchronizing an output timing of each content view with a shutter glass driving timing, into every synchronization period. The timing information may be sync information directly indicating an output timing of each content view, or may include reference timing information and delay information indicating a delay time between a reference timing and an output timing of each content view. In addition, the synchronization signal may include a diverse range of other types of information according to exemplary embodiments. For example, the synchronization signal may include characteristic information of all the glasses apparatuses which are paired with the display apparatus 100.

The second communication unit 142 transmits a synchronization signal to each glasses apparatus. The second communication unit 142 may transmit a synchronization signal using diverse communication standards as described above. The second communication unit 142 be implemented as a communication module which is separated from the first communication unit 141. For example, the second communication unit 142 may communicate with the glasses apparatus using Bluetooth, and the first communication unit 141 may communicate with the glasses apparatus in accordance with an RF communication standard. At least one of the first communication unit 141 and the second communication unit 142 may receive diverse commands such as a remote control right switching command, a menu displaying command, and a volume adjusting command from the glasses apparatus or other external devices.

The storage unit 180 stores a diverse range of programs and data which are used to operate the display apparatus 100. The storage unit 180 may store various types of information such as operation information corresponding to a remote control signal, identification information about a glasses apparatus which is connected to the display apparatus 100, and information about a content view having a remote control right. The control unit 130 controls operations of the display apparatus 100 based on the programs and data stored in the storage unit 180.

The remote control signal receiving unit 195 receives a remote control signal from a remote controller. The remote control signal may be transmitted using various types of communication methods. For example, the remote control signal may be constituted in a code signal in which a lead code, a custom code, a data code and the like are combined, and may be transmitted using a carrier frequency signal included in a frequency band designated according to a manufacturer or product.

The control unit 130 performs various types of operations according to a remote control signal received by the remote control signal receiving unit 195. For example, when the display apparatus 100 is in a stand-by state, and a command to turn on the display apparatus 100 is input, the control unit 130 turns on the display apparatus 100 by supplying power to the components of the display apparatus 100 in accordance with the command.

In the general mode, when a channel switching command or a volume adjusting command is input, the control unit 130 controls the first and second receiving units 150 and 155, the video processing unit 110, and the audio processing unit 160 to change the channel or adjust the volume.

When a command to execute the multi-view function is input, the control unit 130 controls the first and second receiving units 150 and 155 and the video processing unit 110 to receive a plurality of contents and generate a plurality of content views. Since sources providing contents and types thereof have been described above, a description thereof is not repeated.

In the multi-view mode, when the remote control signal receiving unit 195 receives a remote control signal, the control unit 130 performs operations corresponding to the remote control signal for a content view having a remote control right from among the content views.

The remote control right may be easily moved according to the user's choice. That is, in the multi-view mode in which a plurality of content views are displayed, if a command to change content is input from a glasses apparatus which is synchronized with a content view which does not have the remote control right, the control unit 130 identifies identification information of the glasses apparatus and information about the content view which is synchronized with the glasses apparatus, from the storage unit 180. In addition, the control unit 130 selects the content view as a target content view and stores information about the content view in the storage unit 180.

In another exemplary embodiment, a remote control right switching command may be received through a remote controller. The user may switch a remote control right using a key for switching the remote control right from among the keys provided on the remote controller 300. For example, a left direction key of the remote controller may be matched with a function for switching to a first content view and a right direction key may be matched with a function for switching to a second content view. In this case, when a left direction key signal is input, the control unit 130 assigns the remote control right to the first content view A, and when a right direction key signal is input, the control unit 130 assigns the remote control right to the second content view B. Alternatively, a remote control right switching function may be matched with number keys such as "1" and "2", or may be matched with a single key. When the remote control right switching function is matched with a single key, the control unit 130 moves the remote control right sequentially whenever the key is pressed.

Such information may be stored in a non-volatile memory of the storage unit 180. Accordingly, although the display apparatus 100 is turned off and then turned back on, the target content view may be maintained as selected by the user. In another exemplary embodiment, when the display apparatus 100 is turned off and then turned back on, information about the target content view may be reset so that the first content view set as the default may be automatically selected as the target content view.

The control unit 130 may set a target content view using a control right setting area provided in an internal memory (not shown) or the storage unit 180. For example, in the dual-view mode in which two content views are provided, when the first content view is selected as a target content view, the control unit 130 may record a digital code "00" in the control right setting area, and when the second content view is selected as a target content view, the control unit 130 may record a digital code "01" in the control right setting area. In this case, when a remote control right switching command is input, the control unit 130 switches the digital code from "00" to "01" or from "01" to "00". It is understood these digital codes are exemplary only, and that may different types of digital codes may be used.

Subsequently, when various types of control signals are input, the control unit 130 decides a content view to process by identifying a code recorded in the control right setting area. For example, when content displayed on the target content view is a broadcast signal, the channel or volume may be changed by selecting a channel key or a volume key, and when content displayed on the target content view is a multimedia content file, operations such as change, rewind, fast forward, play, pause, and stop of the content may be controlled. More specifically, for example, when a command to change the channel is input, the control unit 130 identifies from the storage unit 180 target content view information indicating which of the content views has the remote control right. The control unit 130 changes the channel of the target content view according to the channel changing command. Only the remote control signal receiving unit 195 is shown in FIG. 7, but the control unit 130 may also perform various types of control operations according to a user command input through an input device, such as, for example, buttons provided on the display apparatus 100.

When a new glasses apparatus is connected through the second communication unit 142 or the first communication unit 141, the control unit 130 stores information related to the new glasses apparatus in the storage unit 180. For example, the control unit 130 may store information about a content view which is synchronized with the glasses apparatus, volume information, and information about other display properties as well. Accordingly, the control unit 130 may adjust an output level of an audio signal corresponding to each content view or color display properties based on the stored information. In addition, when more than a preset number of glasses apparatuses are connected to the display apparatus 100, the control unit 130 may limit the connection of additional glasses apparatuses.

Although not shown in FIG. 7, the display apparatus 100 may further include a network interface to receive a content file from a server through the Internet or other local network, a recording medium reproducing unit, an interface to be connected to a recording medium reproducing apparatus, and so on. The control unit 130 may selectively activate the receiving units 150 and 155, a network interface, a recording medium reproducing unit, an interface, or the storage unit 180 according to a content source selected by the user in the multi-view mode. Accordingly, data provided by diverse sources may be provided as a plurality of content views.

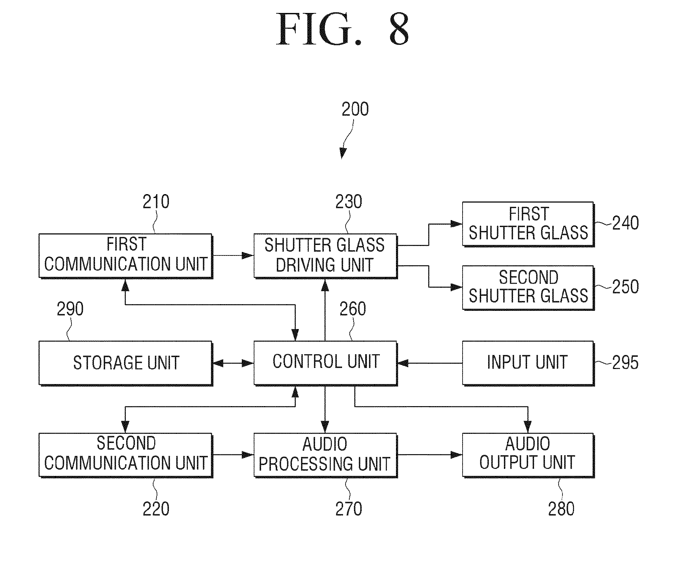

FIG. 8 is a block diagram illustrating an example of a configuration of an active type glasses apparatus according to an exemplary embodiment. As shown in FIG. 8, the glasses apparatus 200 may include a first communication unit 210, a second communication unit 220, a shutter glass driving unit 230, a first shutter glass 240, a second shutter glass 250, a control unit 260, an audio processing unit 270 (e.g., audio processor), an audio output unit 280, a storage unit 290, and an input unit 295.

The first communication unit 210 receives a synchronization signal from the display apparatus 100. The first communication unit 210 may communicate with the display apparatus 100 using various types of wireless communication methods such as Bluetooth, WiFi, Zigbee, RF communications, and the like. When the display apparatus 100 is implemented as shown in FIG. 7, the first communication unit 210 may communicate with the second communication unit 142 of the display apparatus 100. When the glasses apparatus 200 is turned on, the control unit 260 controls the first communication unit 210 to communicate with the display apparatus 100 to establish a connection. When the glasses apparatus 200 is connected to the display apparatus 100 and thus receives a synchronization signal through the first communication unit 210, the shutter glass driving unit 230 drives the first and second shutter glasses 240 and 250 according to the synchronization signal. When the glasses apparatus 200 is matched with a first content view, the shutter glass driving unit 230 opens the first and second shutter glasses 240 and 250 in synchronization with a display timing of the first content view at the same time, or when the glasses apparatus 200 is matched with a second content view, the shutter glass driving unit 230 opens the first and second shutter glasses 240 and 250 in synchronization with a display timing of the second content view at the same time.

According to an exemplary embodiment, the first and second shutter glasses 240 and 250 each include a plurality of transparent electrodes, a liquid crystal layer provided between the transparent electrodes, a polarizing plate, and a transparent substrate supporting the plurality of transparent electrodes, liquid crystal layer, and polarizing plate. Accordingly, each liquid crystal of the liquid crystal layer is turned on or off according to voltage applied to the plurality of transparent electrodes. When each liquid crystal is turned off, light cannot penetrate the liquid crystal layer, and when each liquid crystal is turned on, light can penetrate the liquid crystal layer.

The shutter glass driving unit 230 includes a driving circuit which is connected to the transparent electrodes provided in the first and second shutter glasses 240 and 250. The shutter glass driving unit 230 transmits a driving signal to the transparent electrodes, thereby driving the first and second shutter glasses 240 and 250 individually. If 3D content is being reproduced, the shutter glass driving unit 230 turns on or off the first and second shutter glasses 240 and 250 alternately one by one. When the multi-view function is being executed, the shutter glass driving unit 230 turns on or off the first and second shutter glasses 240 and 250 at the same time.

The control unit 260 may automatically select a content view to be initially synchronized according to a use history of the glasses apparatus 200. In other words, when the glasses apparatus 200 is turned off while showing a second content view lastly, the control unit 260 may be directly synchronized with the second content view based on history information indicating that the lastly synchronized content view is the second content view. In addition, the control unit 260 may be directly synchronized with a content view having the remote control right. In this case, information about the content view having the remote control right may be transmitted to the glasses apparatus 200 in the communication connecting process between the display apparatus 100 and the glass apparatus 200. In addition, the control unit 260 may be directly synchronized with a content view selected by the user after the glasses apparatus 100 is turned on.

The second communication unit 220 receives an audio data packet from the display apparatus 100. The second communication unit 220 may communicate with the display apparatus 100 using one of various types of communication methods as described above.

Information received through the first and second communication units 210 and 220 may be stored in the storage unit 290.

When an audio data packet is received through the second communication unit 220, the audio processing unit 270 processes the audio data packet, thereby generating an audio signal. The audio output unit 280 outputs the audio signal. The audio output unit 280 may be implemented as a speaker or earphones, in various types of configurations and positions. The audio output unit 280 may output audio data at a volume level designated for the audio data. The volume may be adjusted using a variable resistance provided on an output terminal. That is, when a volume adjusting key provided on the glasses apparatus 200 is adjusted, the audio output unit 280 may change the volume level of the output audio signal by changing a variable resistance value according to the adjusted state.

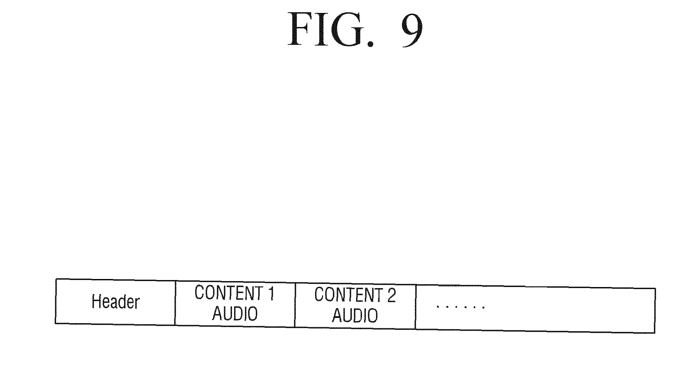

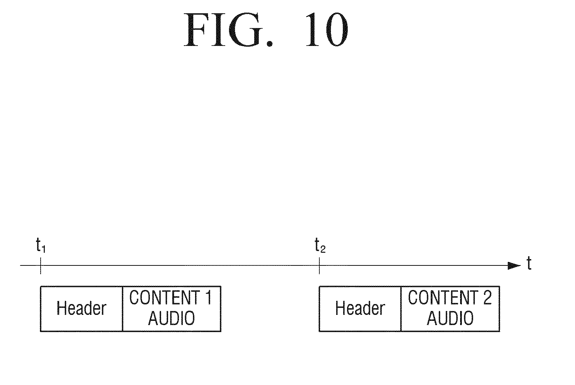

FIGs. 9 and 10 illustrate several types of structures of an audio data packet transmitted from the display apparatus 100 according to exemplary embodiments.

With reference to FIG. 9, the packetizing unit 165 of the display apparatus 100 may collect audio signals of a plurality of contents, thereby generating a single audio data packet. That is, an audio signal of content 1 and an audio signal of content 2 may be recorded in a payload section of a single packet.

When audio signals of a plurality of contents are packetized into a single packet and are transmitted as shown in FIG. 9, the control unit 260 controls the audio processing unit 270 to selectively detect and process audio data of content 1 or audio data of content 2 from a preset portion of the payload section of the received packet.

That is, when the glasses apparatus 200 is turned on, the control unit 260 controls the second communication unit 220 to sequentially scan candidate bands as described above so as to identify whether or not an audio packet is received. When an audio packet is received, the control unit 260 selects a section where audio data of currently synchronized content are positioned by identifying a packet header section. The audio processing unit 270 processes the audio data recorded in the selected section, thereby generating a sound signal. The generated sound signal is output by the audio output unit 280. The configuration and position of the audio output unit 280 may be implemented in various ways, as described above.

Alternatively, as shown in FIG. 10, the packetizing unit 165 of the display apparatus 100 may individually packetize an audio signal of each type of content. The first communication unit 141 may alternatively transmit each generated packet in the same frequency band at intervals. With reference to FIG. 10, at a time t1, a first packet 10 containing audio data of content 1 is transmitted, and at a time t2, a second packet 20 containing audio data of content 2 is transmitted. The interval between the two packets may be known between the display apparatus 100 and the glasses apparatuses. For example, when the interval is set to 2.5ms, a glasses apparatus for viewing content 1 and a glasses apparatus for viewing content 2 each receive and process audio packets repeatedly at time intervals of 2.5ms.

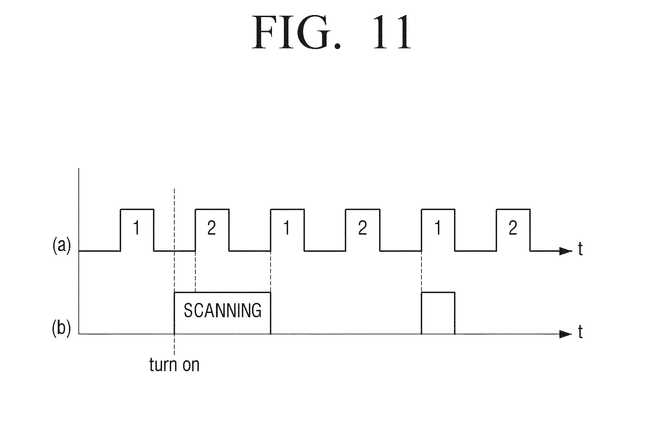

FIG. 11 illustrates an operation of the glasses apparatus according to an exemplary embodiment in which audio signals are transmitted using a plurality of packets. In FIG. 11, (a) indicates that a first packet containing audio data of content 1 and a second packet containing audio data of content 2 are transmitted alternately.

When a glasses apparatus 200 is turned on, the control unit 260 performs scanning. More specifically, the second communication unit 220 sequentially scans through a plurality of candidate bands such as 2.4 GHz, 5.2 GHz, and 5.5 GHz to detect the band being used for communication, thereby receiving a signal. When the glass apparatus 200 is synchronized with content 1, scanning is finished when reception of the first packet is identified. For example, when the first packet and second packet are formed as shown in FIG. 10, the control unit 260 may determine whether the first packet is received, based on an identifier recorded in the header or payload section of the first packet. The control unit 260 may activate the second communication unit 220 at regular intervals using a transmission time difference between the first and second packets. As described above, information about the transmission time difference may be shared in advance by the display apparatus 100 and the glasses apparatus 200, and may be stored by the display apparatus 100 and the glasses apparatus 200 individually. The control unit 260 may receive a first packet at a point of time and identify reception of the first packet, may deactivate the second communication unit 220 until a subsequent first packet is received, and may activate the second communication unit 220 at a point of time when the subsequent first packet is received.

In another exemplary embodiment, audio signals of a plurality of contents may be packetized into different packets, be modulated to RF signals of different frequency bands, and be output. That is, the first communication unit 141 of the display apparatus 100 may modulate a first packet including an audio signal of content 1 into an RF signal of a first frequency band and modulate a second packet including an audio signal of content 2 into an RF signal of a second frequency band so that each signal can be output without a time difference. In this case, frequency information of each RF signal may be contained in synchronization information transmitted by the second communication unit 142.

In view of the above, transmission methods of audio signals may be implemented in diverse ways according to exemplary embodiments. In addition, an operation of the glasses apparatus which receives an audio signal may also vary according to exemplary embodiments.

Returning to FIG. 8, the input unit 295 may include various types of keys provided on the glasses apparatus 200. More specifically, at least one key may be provided which is matched with operations such as turning the glasses apparatus 200 on or off, pairing, content view switching, volume control, and remote control right switching may be provided on a main body of the glasses apparatus 200. The keys may be implemented in various forms such as a push button, dial, jog & shuttle, wheel, touch button, touch pad, and the like.

The control unit 260 may perform various types of control operations according to manipulation using the keys. For example, when a key for switching a remote control right is selected through the input unit 295, the control unit 260 may generate a remote control switching command including information about a content view currently synchronized with the shutter glass driving unit 230, and transmit the remote control switching command to the display apparatus through the first communication unit 210 or second communication unit 220.

In addition, in the turned-off state, when a power key is selected, the control unit 260 turns on the glasses apparatus 200 by supplying power from a battery (not shown) to all the components, and in the turned-on state, when the power key is selected, the control unit 260 cuts off a power supply using a switch (not shown).

In addition, when a pairing key to perform pairing with the display apparatus 100 is selected, the control unit 260 controls the first communication unit 210 to perform pairing. More specifically, the control unit 260 controls the first communication unit 210 to transmit a pairing triggering signal to the display apparatus 100. Subsequently, when address information of the display apparatus 100 is received through the first communication unit 210, the control unit 260 stores the address information in the storage unit 290. Then, the first communication unit 210 communicates with the display apparatus 100 to establish a connection using the stored address information.

The storage unit 290 may store various types of data such as a synchronization signal and target content view information which are received through the first and second communication units 210 and 220 as well as the address information received from the display apparatus 100. In addition, the storage unit 290 may store various types of driving programs to drive the glasses apparatus 200.

When a key for changing a content view is selected, the control unit 260 controls the shutter glass driving unit 230 to change to another content view using a synchronization signal stored in the storage unit 290. For example, it is assumed that the shutter glass driving unit 230 is synchronized with a first content view. When a command to change the content view is input by the control unit 260, the shutter glass driving unit 230 adjusts a driving timing so that the first and second shutter glasses 240 and 250 may be turned on in synchronization of a display timing of a second content view.

When a key for adjusting the volume is selected, the control unit 260 controls the audio output unit 280 to turn the volume output level up or down according to the selected key.

As described above, the display apparatus 100 and the glasses apparatus 200 may be provided in various forms and configurations. The display apparatus 100 may change a content view or switch a remote control right according to a signal transmitted from the glasses apparatus 200.

FIG. 8 illustrates a configuration of an active type glasses apparatus according to an exemplary embodiment, but a passive type glass apparatus may also be configured in a similar form according to other exemplary embodiments. For example, the components shown in FIG. 8 except for the first communication unit 210, shutter glass driving unit 230, and first and second shutter glasses 240 and 250 may be applied to the passive type glasses apparatus. Accordingly, a description and illustration thereof are omitted.

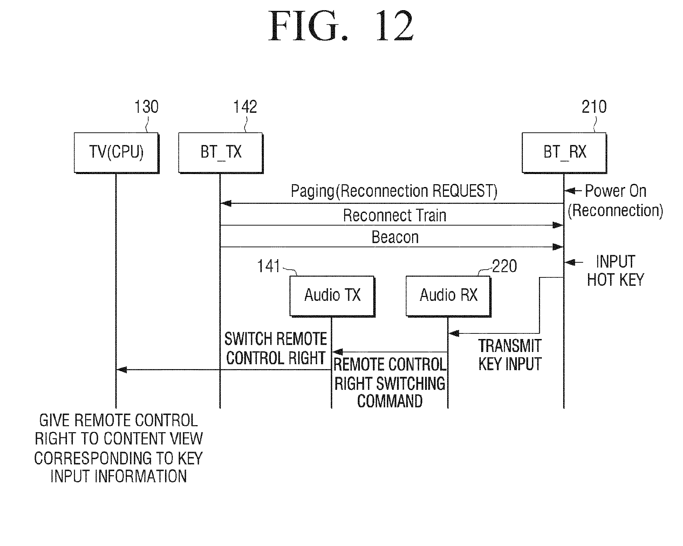

FIG. 12 is a timing chart illustrating a method for switching a remote control right. With reference to FIG. 12, the display apparatus 100 includes a central processing unit (CPU), a BT_TX, and an audio TX. The CPU, BT_TX, and audio TX may correspond to the control unit 130, second communication unit 142, and first communication unit 141. In addition, the glasses apparatus 200 includes a BT_RX and an audio RX. The BT_RX and audio RX may correspond to the first communication unit 210 and second communication unit 220 of the glasses apparatus 200.

With reference to FIG. 12, when a power key provided on the glasses apparatus 200 is selected and turns the power on, the first communication unit 210 of the glasses apparatus 200 performs a communication connection to establish communication. As shown in FIG. 12, when the second communication unit 142 communicates with the first communication unit 210 in accordance with the Bluetooth standards, an inquiry process is first performed for link connection. Subsequently, a paging process is performed. In the paging process, the second communication unit 142 informs the first communication unit 210 of an address (e.g., Bluetooth device address) and clock of the second communication unit 142. The control unit 260 of the glasses apparatus 200 stores the Bluetooth device address and clock in the storage unit 290.

When a key for switching a remote control right is selected in the glasses apparatus 200 after the communication connection is performed, the second communication unit 220 receives the key input notification and transmits a remote control right switching command to the communication unit 140 (e.g., first communication unit 141) of the display apparatus 100. FIG. 12 shows that the first communication unit 210 transmits the key input notification. However, this operation may be performed by the control unit 260 of the glasses apparatus 200. The remote control right switching command may include information about a content view which is currently synchronized with the glasses apparatus 200. This information may be separately transmitted.

The communication unit 140 of the display apparatus 100 may transmit the received remote control right switching command and content view information to the control unit 130. The control unit 130 deprives a content view currently having a remote control right of the remote control right, and provides the remote control right to the content view synchronized with the glasses apparatus 200. More specifically, the control unit 130 switches the remote control right by changing a bit value recorded in a control right setting area provided in an internal memory (not shown) or the storage unit 180.

Subsequently, when a remote control signal is received, the control unit 130 performs an operation corresponding to the remote control signal for the content view newly having (e.g., assigned) the remote control right.

The communication connection between the glasses apparatus 200 and the display apparatus 100 as shown in FIG. 12 may be performed periodically. For example, a passive method of requesting a communication connection by the display apparatus 100 and an active method of transmitting information directly from the glasses apparatus 200 to the display apparatus 100 are each possible, alone or in combination, according to exemplary embodiments.

Various types of information provided by the glasses apparatus 200 may be used in the display apparatus 100 according to a diverse range of methods. For example, the display apparatus 100 may prevent more than a preset number of glasses apparatuses from being connected.

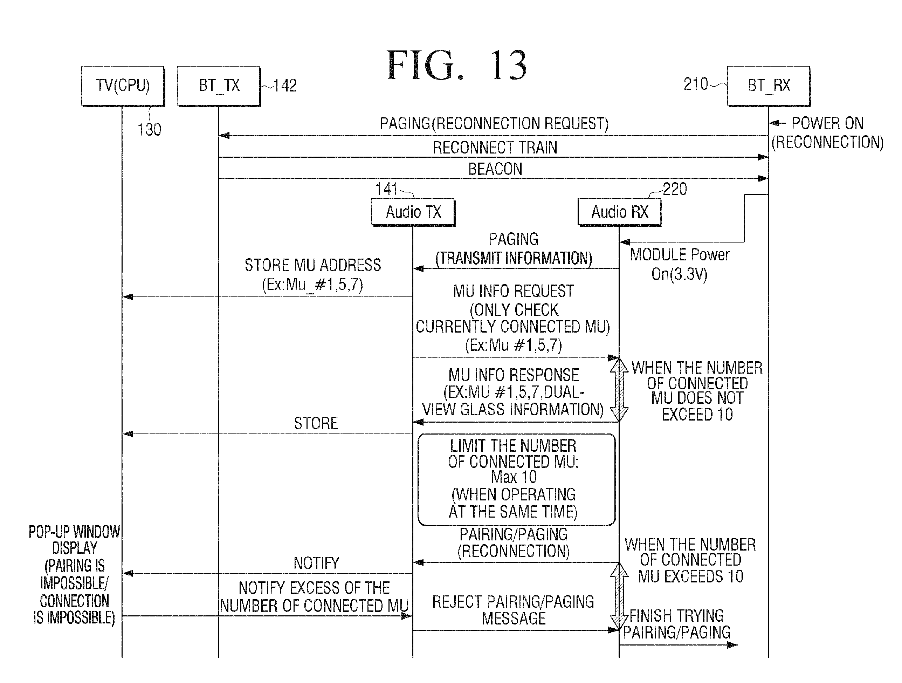

FIG. 13 illustrates a pairing operation between the display apparatus 100 and the glasses apparatus 200 in an exemplary embodiment in which the number of glasses apparatuses is limited.

With reference to FIG. 13, when the first communication unit 210 of the glasses apparatus 200 communicates with the second communication unit 142 of the display apparatus 100, the second communication unit 220 transmits diverse information about the glasses apparatus 200 to the first communication unit 141 of the display apparatus 100. For this process, various different types of RF communication standards may be used. More specifically, the second communication unit 220 may transmit diverse information such as a version of software used by the glasses apparatus 200, an address of the glasses apparatus 200, sensitivity and so on, to the display apparatus 100.

When the first communication unit 141 of the display apparatus 100 transmits information about the address of the glasses apparatus 200 to the control unit 130, the control unit 130 stores the information in the storage unit 180. Subsequently, the first communication unit 141 requests additional information from the glasses apparatus 200 which is connected to the display apparatus 100. The second communication unit 220 transmits various types of information such as glasses apparatus information (dual view glass information) and information about a currently synchronized content view, in response to the request.

According to exemplary embodiments, the control unit 130 of the display apparatus 100 may limit the number of concurrently connected glasses apparatuses. For example, it is assumed that up to 10 glasses apparatuses are set to be connected to the display apparatus 100 at the same time. When the second communication unit 220 of the glass apparatus 200 tries to perform pairing or paging, the first communication unit 141 informs the control unit 130 of the pairing or paging of the glasses apparatus 200. The control unit 130 identifies the number of currently connected glasses apparatuses. When the preset number (e.g., 10 in the example) of glasses apparatuses have been already connected, the control unit 130 displays a connection rejecting message or a message indicating that connection is impossible for any additional glasses apparatuses exceeding the 10 connected glasses, through the display unit 120.

In addition, the control unit 130 controls the first communication unit 141 to inform that the number of connected glasses apparatuses exceeds the preset number. The first communication unit 141 transmits a connection rejection signal to reject pairing or paging according to the control of the control unit 130.

When the connection rejection signal is received, the second communication unit 220 of the glasses apparatus 200 finishes trying to perform pairing or paging.

The control unit 130 of the display apparatus 100 may control the OSD processing unit 175 and display unit 120 to display various types of information according to various types of signals input from the glasses apparatus 200 or the remote controller 300. For example, the OSD processing unit 175 and display unit 120 may display information to identify a connection state of glasses apparatuses

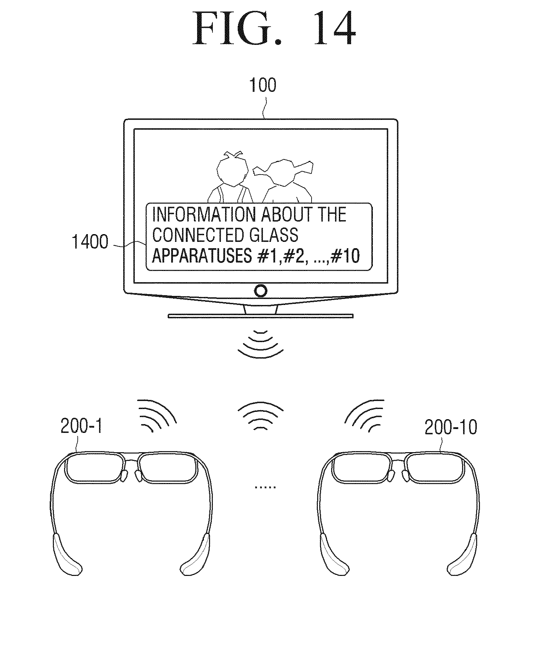

FIG. 14 illustrates an operation of the display apparatus showing a connection state of glasses apparatuses according to an exemplary embodiment.

With reference to FIG. 14, in a situation in which a total of 10 glasses apparatuses 200-1 to 200-10 are connected to the display apparatus 100 and a command to identify a connection state is input through a glasses apparatus or a remote controller, or in a situation in which a total of 9 glasses apparatuses are connected to the display apparatus 100 and a tenth glasses apparatus 200-10 is additionally connected, information 1400 about the connected glasses apparatuses may be displayed. Through this information, the user can check a number of glasses apparatuses which are connected in total or whether a glasses apparatus which is not used is connected. Accordingly, an operation of unnecessary glasses apparatuses may be reduced.

If more than an allowable number of glass apparatuses are connected, a message indicating this state may be displayed.

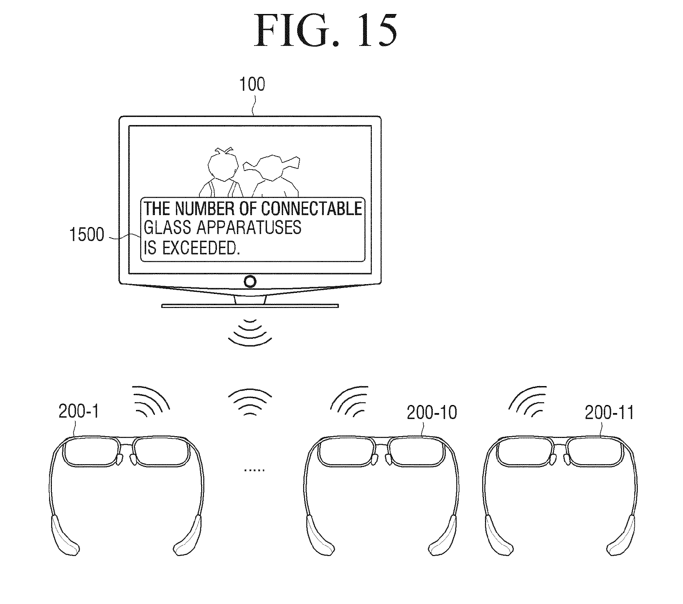

FIG. 15 illustrates an operation of the display apparatus displaying a connection rejection message. With reference to FIG. 15, in a state in which a total of 10 glasses apparatuses 200-1 to 200-10 are connected to the display apparatus 100, when an eleventh glasses apparatus 200-11 tries to perform pairing or paging, the display apparatus 100 transmits a connection rejection signal to the eleventh glasses apparatus 200-11 and displays on the screen of the display apparatus 100 a message 1500 indicating that the number of connectable glass apparatuses has been exceeded.

In another exemplary embodiment, the display apparatus 100 may selectively change a display state of a menu displayed on each content view using information about a content view synchronized with each glasses apparatus 200-1 to 200-10.

More specifically, it is assumed that the display apparatus 100 is constituted as shown in FIG. 7. When the user presses a menu button provided on the glasses apparatus 200-1 or 200-2 or the remote controller, the control unit 130 receives a menu display command through the first or second communication unit 141 or 142. When the menu display command is input, the control unit 130 may control the OSD processing unit 175 to generate an OSD menu.

The OSD processing unit 175 generates icons or a list of diverse supportable menus in an OSD form. The display unit 120 displays the generated OSD menu on at least one of a plurality of content views. A content view to display the OSD menu may be decided using various types of methods according to an exemplary embodiment. For example, although a glasses apparatus synchronized with one of the content views inputs a menu display command, an OSD menu may be displayed on all of the content views. As another example, an OSD menu may be displayed only on a content view synchronized with a glasses apparatus which inputs a menu display command.

When the OSD processing unit 175 generates a plurality of OSD menus, the control unit 130 may control the OSD processing unit 175 to selectively dim at least one of the plurality of OSD menus according to a pairing state with an external device or a source type of the content view.

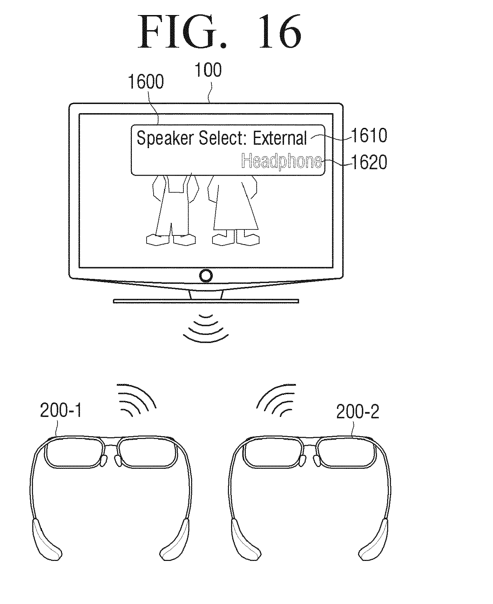

FIG. 16 illustrates an operation of the display apparatus which changes a menu display state. With reference to FIG. 16, the display apparatus 100 operates in the multi-view mode, and both the first and second glasses apparatuses 200-1 and 200-2 are synchronized with a second content view. In this case, since there is no glasses apparatus which uses a first content view, e.g., a main channel, there is no need to output sounds through headphones provided to the glasses apparatuses 200-1 and 200-2.

Accordingly, the control unit 130 controls the OSD processing unit 175 to display a headphone output menu 1620 in a deactivated state and display a main speaker output menu 1610 in an activated state. In FIG. 16, the deactivated menu 1620 is displayed in a dimming manner, but it is also possible to exclude the deactivated menu 1620 from the menu 1600.

Various types of menus other than the speaker output may be individually displayed according to a connection state of the glasses apparatuses. For example, when a menu display command is input for a first content view which selects a TV source capable of selecting one of a plurality of broadcast channels, a menu to change the TV channel may be activated and displayed. However, when a menu display command is input for a second content view corresponding to an input port which is connected to a recording medium reproducing apparatus to reproduce a recording medium in which a single content is recorded, the menu to change the TV channel may be deactivated or may not be displayed at all. In the same example, when a menu display command is input for the second content view, various types of menus such as menus with controls to play, stop, pause, rewind, and fast forward content may be activated and displayed, but in the first content view, such menus may be deactivated or may not be displayed at all.

In yet another exemplary embodiment, when the use of one of the two content views is not detected, the control unit 130 may automatically change the display apparatus 100 into the single view mode. That is, the control unit 130 may automatically change the mode according to a connection state of each glasses apparatus.

As described above, the display apparatus 100 and the glasses apparatus 200 may communicate with each other using various types of communication devices and methods, and the display apparatus 100 may perform various types of control operations according to the communication results.

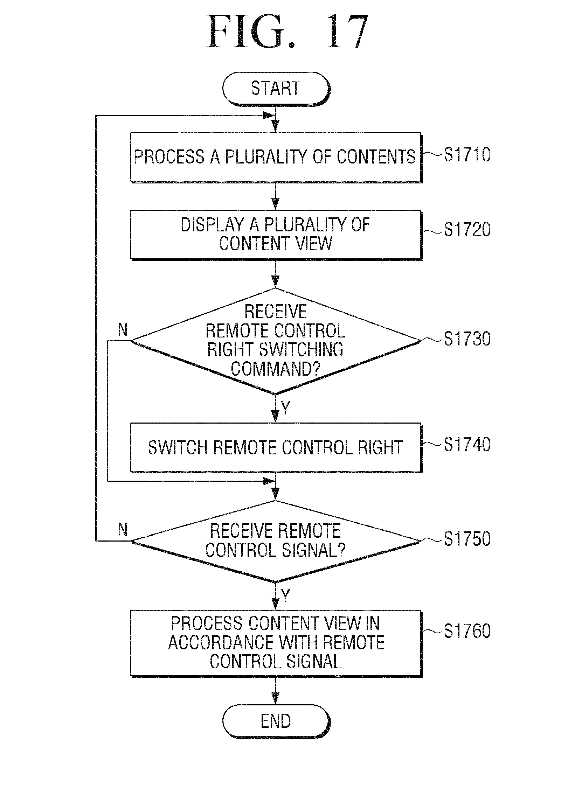

FIG. 17 is a flow chart illustrating a multi-view display method of a display apparatus according to an exemplary embodiment. With reference to FIG. 17, the display apparatus 100 processes a plurality of contents in operation S1710 and displays a plurality of content views in operation S1720.

When a remote control right switching command is received in operation S1730, the display apparatus 100 gives a remote control right to a content view which is synchronized with a glasses apparatus which transmits the remote control right switching command in operation S1740. Subsequently, when a remote control signal is received in operation S1750, the display apparatus 100 processes the corresponding content view in accordance with the remote control signal in operation S1760.

Although not shown in FIG. 17, audio data may be separately transmitted to the glasses apparatuses. That is, the display apparatus 100 may further perform operations such as individually processing audio data included in the plurality of contents, packetizing each processed unit of audio data, and transmitting a plurality of packetized audio data packets to the glasses apparatuses. Accordingly, a glasses apparatus may process audio data packets corresponding to a synchronized content view and output the audio data packets through the audio output unit of the glasses apparatus such as earphones or headphones. Other than that, the operations as described above with respect to the exemplary embodiments may be performed in the multi-view displaying process of FIG. 17.

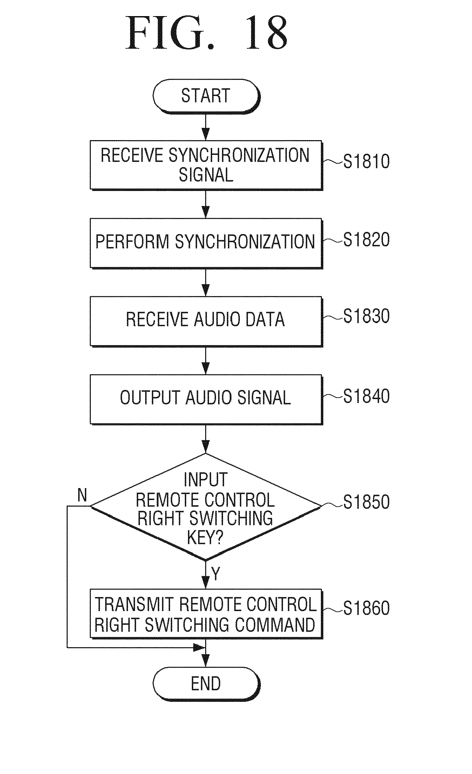

FIG. 18 is a flow chart illustrating a remote control right switching operation of a glasses apparatus according to an exemplary embodiment. With reference to FIG. 18, when the glasses apparatus 200 receives a synchronization signal in operation S1810, the glasses apparatus 200 is synchronized with a content view selected by the user in operation S1820. Subsequently, the glasses apparatus 200 receives audio data corresponding to the synchronized content view in operation S1830, and processes and outputs the audio data in operation S1840. Since the synchronizing operation with the content view and audio data processing and the outputting operation have been described above in detail, a description thereof is not repeated.

When a remote control right switching key is input in operation S1850, the glasses apparatus 200 transmits a remote control right switching command together with information about the currently synchronized content view in operation S1860. Consequently, the user may easily move a remote control right to a content view which is currently viewed.

Various types of operations as described above may be applied to a passive type display apparatus and glasses apparatus as well as an active type display apparatus and glasses apparatus.

External devices like the glasses apparatus as described above are paired with the display apparatus so as to transmit and receive various types of commands and data. In particular, a hot key which is matched with a remote control right switching command or other commands may be provided on the main body of the glasses apparatus.

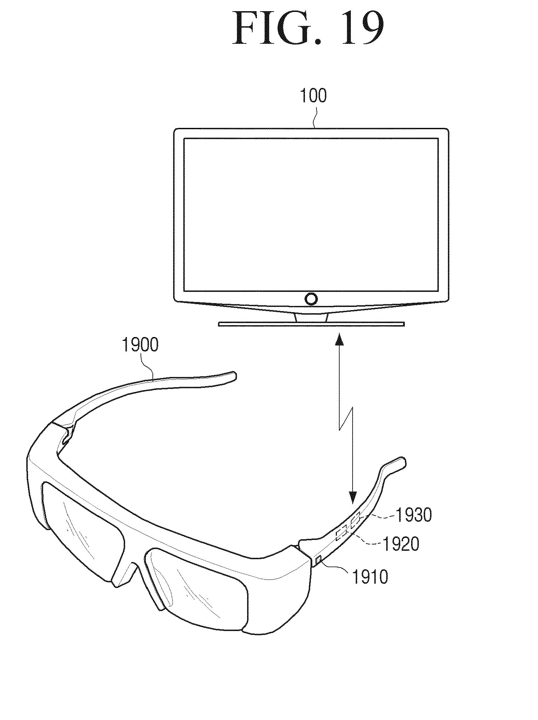

FIG. 19 illustrates an example of an exterior structure of a glasses apparatus including a key which is matched with a remote control right switching command according to an exemplary embodiment.

With reference to FIG. 19, the glasses apparatus may include a main body 1900 including a glass unit and a leg unit, and may further include a key 1910, a control unit 1920, and a communication unit 1930 which are provided on the main body 1900.

The key 1910 may be provided on a hinge between the glass unit and the leg unit. The key 1910 may be provided in various forms such as a touch button, push button, bar switch, wheel, and so on.

When the key 1910 is selected, the control unit 1920 generates a remote control right switching command to switch a remote control right to a content view which is currently synchronized with the glasses apparatus from among a plurality of content views. The control unit 1920 transmits the generated remote control right switching command to a display apparatus through the communication unit 1930.

In FIG. 19, only the key 1910, the control unit 1920, and the communication unit 1930 are illustrated, but the components mentioned above with respect to the exemplary embodiments may be built in the main body 1900 of the glasses apparatus.

For example, when the glasses apparatus is a shutter glass type, the glasses apparatus may further include first and second shutter glass units, a shutter glass driving unit to drive the first and second shutter glass units, an audio processing unit to process an audio signal, and an audio output unit to output the audio signal processed by the audio processing unit. The communication unit 1930 may include a first communication unit to receive a synchronization signal from a display apparatus and transmit the synchronization signal to the shutter glass driving unit, and a second communication unit to receive an audio signal from a display apparatus and transmit the audio signal to the audio processing unit.

When the glasses apparatus is a polarizing type, the glass unit may include a left glass and a right glass which have the same polarization directions. The polarizing type glasses apparatus may also further include components such as an audio processing unit and an audio output unit.

The multi-view display method, the remote control right switching method, and the pairing and paging method according to the above-described exemplary embodiments described above may be coded in software. Such software may be recorded in a non-transitory computer readable medium and may be used in devices such as a display apparatus and a glasses apparatus.

A non-transitory computer readable medium is a medium which does not store data temporarily such as a register, cache, and memory, but stores data semi-permanently and is readable by a device. More specifically, the aforementioned diverse programs may be stored and provided in a non-transitory computer readable medium such as a compact disk (CD), digital video disk (DVD), hard disk, Blu-ray disk, universal serial bus (USB), memory card, and read-only memory (ROM).

The foregoing exemplary embodiments and advantages are merely exemplary and are not to be construed as limiting the present invention. The present teaching can be readily applied to other types of apparatuses. Also, the description of the exemplary embodiments is intended to be illustrative, and not to limit the scope of the invention as defined in the claims.

## Claims

1. A display apparatus comprising:
a video processing unit arranged to process video data relating to a plurality of content;
a display unit arranged to display a plurality of content views using the video data processed by the video processing unit;
a communication unit arranged to communicate with an external device which is paired with the display apparatus; and
a control unit which is arranged, in response to receipt of a remote control right switching command from the external device, to give a remote control the right to a content view that corresponds to the remote control right switching command.

2. The display apparatus as claimed in claim 1, further comprising:
a synchronization signal generating unit arranged to generate synchronization signals corresponding to the plurality of content views,
wherein the communication unit comprises a first communication unit which is arranged to receive the remote control right switching command from the external device and a second communication unit which is arranged to transmit the synchronization signals to the external device, and
wherein the external device is a shutter glass type glasses apparatus which comprises a left eye shutter glass and a right eye shutter glass which are driven individually.

3. The display apparatus as claimed in claim 1, wherein the external device is a polarization type glasses apparatus which comprises polarizing glasses.

4. The display apparatus as claimed in any one of the preceding claims, further comprising:
an OSD processing unit which, if the content view having the remote control right is switched in accordance with the remote control right switching command, is arranged to displays a notification message on a content view to which the remote control right is newly given.

5. The display apparatus as claimed in any one of the preceding claims when dependent on claim 2 or 3, wherein in a state that a preset number of glasses apparatuses are paired with the display apparatus, if a connection request is received from a new glasses apparatus, the control unit is arranged to transmit a connection rejection signal to the new glasses apparatus.

6. The display apparatus as claimed in claim 5, wherein the control unit is arranged to display a connection rejection message through the display unit.

7. The display apparatus as claimed in any one of the preceding claims, further comprising:
an on-screen display (OSD) processing unit which is arranged to generate a plurality of OSD menus in response to an input menu display command,
wherein the display unit is arranged to display the plurality of OSD menus on at least one of the plurality of content views, and
wherein the control unit is arranged to control the OSD processing unit to selectively dim at least one of the plurality of OSD menus according to a pairing state with the external device or a source type of the plurality of content views.

8. The display apparatus as claimed in any one of the preceding claims when dependent on claim 2, further comprising:
an audio processing unit arranged to individually process audio data included in the plurality of contents; and
a packetizing unit arranged to packetize the audio data processed by the audio processing unit,
wherein the first communication unit is arranged to transmit the plurality of audio data packets packetized by the packetizing unit to the glasses apparatus.

9. A multi-view display method for a display apparatus, the method comprising:
processing video data relating to a plurality of content;
displaying a plurality of content views using the processed video data; and
if a remote control right switching command is input from an external device which is paired with the display apparatus, giving a remote control the right to a content view corresponding to the remote control right switching command from among the plurality of content views.

10. The method as claimed in claim 9, further comprising:
generating synchronization signals corresponding to the plurality of content views; and
transmitting the synchronization signals to the external device,
wherein the external device is a shutter glass type glasses apparatus which comprises a left eye shutter glass and a right eye shutter glass which are driven individually.

11. The method as claimed in claim 9, wherein the external device is a polarization type glasses apparatus which comprises polarizing glasses.

12. The method as claimed in claim 10 or 11, further comprising:
if the content view having the remote control right is switched in accordance with the remote control right switching command, displaying a notification message on a content view to which the remote control right is newly given.

13. The method as claimed in claim 10, 11 or 12further comprising:
in a state that a preset number of glasses apparatuses are paired with the display apparatus, if a connection request is received from a new glasses apparatus, transmitting a connection rejection signal to the new glasses apparatus; and
displaying the connection rejection message.

14. The method as claimed in any one of claims 9 to 13, further comprising:
if a menu display command is input, generating a plurality of OSD menus; and
displaying the plurality of OSD menus on at least one of the plurality of content views,
wherein at least one of the plurality of OSD menus is selectively dimmed according to a pairing state with the external device or a source type of the plurality of content views.

15. The method as claimed in any one of claims 9 to 14 when dependent on claim 10, further comprising:
individually processing audio data included in the plurality of content;
packetizing the processed audio data; and
transmitting the plurality of packetized audio data packets to the glasses apparatus.
